(19) Europäisches Patentamt
European Patent Office
Office européen des brevets

(11) **EP 4 644 198 A1**

(12) **EUROPEAN PATENT APPLICATION**

(43) Date of publication:
**05.11.2025 Bulletin 2025/45**

(21) Application number: **25167924.7**

(22) Date of filing: **02.04.2025**

(51) International Patent Classification (IPC):
**B60T 17/22** *(2006.01)*    **B60W 40/12** *(2012.01)*
**G01M 17/007** *(2006.01)*    **G01M 17/013** *(2006.01)*

(52) Cooperative Patent Classification (CPC):
**B60T 17/22; B60W 40/12; G01M 17/007;
G01M 17/013;** B60Y 2400/3044

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.05.2024  JP 2024074958**

(71) Applicant: **SUMITOMO RUBBER INDUSTRIES,
LTD.**
**Kobe-shi, Hyogo 651-0072 (JP)**

(72) Inventor: **TOKUDA, Kazuma**
**Chuo-ku, Kobe-shi, Hyogo, 651-0072 (JP)**

(74) Representative: **TBK**
**Bavariaring 4-6**
**80336 München (DE)**

(54) **WHEEL CONDITION DETERMINATION DEVICE, WHEEL CONDITION DETERMINATION
METHOD, AND WHEEL CONDITION DETERMINATION PROGRAM**

(57)    An object is to appropriately determine a wheel condition by cancelling the influence of a road surface on which a vehicle is traveling. A wheel condition determination device includes an acceleration obtaining unit, a variation calculation unit, an index calculation unit, and a determination unit. The acceleration obtaining unit sequentially obtains accelerations in an axle direction of each of wheels attached to both ends of an axle of a vehicle. The variation calculation unit calculates, based on the sequentially obtained accelerations, variations in a time direction among the accelerations of each of the wheels. The index calculation unit calculates an index for comparing the variations of the wheels. The determination unit determines whether or not fixing mechanisms for fixing the wheels to the axle are loose, based on the index.

FIG. 3

**Description**

BACKGROUND OF THE INVENTION

Field of the Invention

The present invention relates to a technique for determining conditions of a wheel.

Background Art

International Publication WO2023/145195 discloses a wheel condition determination device that determines whether or not there is a sign that a wheel is about to come off a vehicle. This wheel condition determination device sequentially obtains axle-direction accelerations of a wheel in the axle direction, and determines that there is a sign that the wheel is about to come off if an obtained axle-direction acceleration(s) is greater than a predetermined determination threshold. In addition, in order to prevent erroneous determination of a wheel condition, the wheel condition determination device determines a travel condition of the vehicle, and ends the process of determining the wheel condition when determining that the vehicle is traveling on a bad road, for example.

According to International Publication WO2023/145195, the determination as to whether or not a vehicle is traveling on a bad road is executed based on an image captured by an imaging unit provided on the vehicle shooting an area in front of the vehicle. However, there are various types of bad roads that may affect the determination of a wheel condition, and therefore, it is considered that it is difficult to appropriately determine whether or not a vehicle is traveling on a bad road, based on images. In addition, such image-based determination is more difficult at nighttime. Under these circumstances, it is considered that the determination of a wheel condition disclosed in International Publication WO2023/145195 is affected by the road surface in no small degree.

It is an object of the present invention to provide a technique capable of appropriately determining a wheel condition by cancelling the influence of a road surface on which a vehicle is traveling.

SUMMARY OF THE INVENTION

A wheel condition determination device according to a first aspect of the present invention includes an acceleration obtaining unit, a variation calculation unit, an index calculation unit, and a determination unit. The acceleration obtaining unit sequentially obtains accelerations in an axle direction of each of wheels attached to both ends of an axle of a vehicle. The variation calculation unit calculates, based on the sequentially obtained accelerations, variations in a time direction among the accelerations of each of the wheels. The index calculation unit calculates an index for comparing the variations of the wheels. The determination unit determines whether or not fixing mechanisms for fixing the wheels to the axle are loose, based on the index.

A wheel condition determination device according to a second aspect of the present invention is the wheel condition determination device according to the first aspect in which the index calculation unit calculates an index for comparing the variations of the wheels after the variations are subjected to a smoothing process for each of the wheels.

A wheel condition determination device according to a third aspect of the present invention is the wheel condition determination device according to the first or second aspect further including a warning generation unit configured to generate and output a warning when the determination unit determines that the fixing mechanism is loose.

A wheel condition determination method according to a fourth aspect of the present invention is a wheel condition determination method that is executed by one or more computers, and includes:

(1) sequentially obtaining accelerations in an axle direction of each of wheels attached to both ends of an axle of a vehicle;
(2) calculating, based on the sequentially obtained accelerations, variations in a time direction among the accelerations of each of the wheels;
(3) calculating an index for comparing the variations of the wheels; and
(4) determining whether or not fixing mechanisms for fixing the wheels to the axle are loose, based on the index.

A wheel condition determination program according to a fifth aspect of the present invention is a wheel condition determination program that causes one or more computers to:

(1) sequentially obtain accelerations in an axle direction of each of wheels attached to both ends of an axle of a vehicle;
(2) calculate, based on the sequentially obtained accelerations, variations in a time direction among the accelerations of each of the wheels;

(3) calculate an index for comparing the variations of the wheels; and

(4) determine whether or not fixing mechanisms for fixing the wheels to the axle are loose, based on the index.

According to the present invention, the influence of a road surface on which a vehicle is traveling can be cancelled, so that it can be appropriately determined whether or not a fixing mechanism for fixing a wheel to an axle is loose, as a wheel condition.

BRIEF DESCRIPTION OF THE DRAWINGS

FIG. 1 is a schematic diagram showing a situation in which a wheel condition determination device according to an embodiment is mounted on a vehicle;

FIG. 2 is a block diagram showing the electrical configuration of the wheel condition determination device;

FIG. 3 is a flowchart showing the process of a wheel condition determination method;

FIG. 4 is a diagram illustrating degrees of variations in acceleration; and

FIG. 5 is a diagram for describing the principle of the wheel condition determination method.

DETAILED DESCRIPTION

A wheel condition determination device, a wheel condition determination method, and a wheel condition determination program according to an embodiment of the present invention will be described below with reference to the accompanying drawings.

<1. Overall configuration>

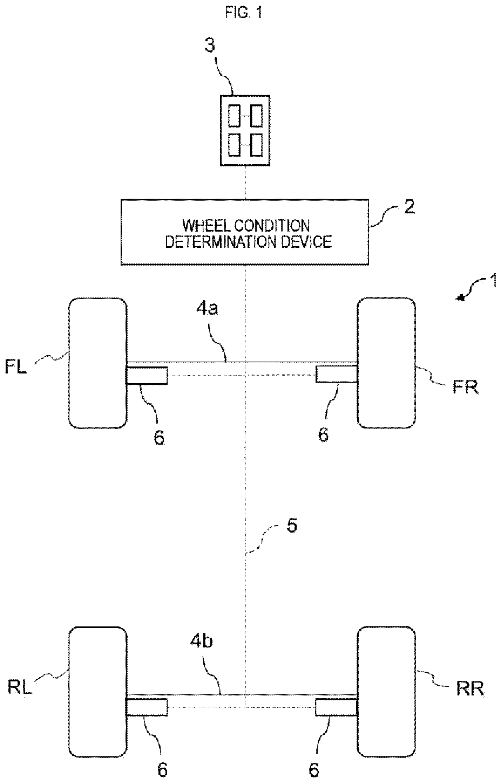

FIG. 1 is a schematic diagram showing a situation in which a wheel condition determination device 2 (also hereinafter simply referred to as "determination device 2") according to this embodiment is mounted on a vehicle 1. The determination device 2 is configured as a control unit of the vehicle 1, for example. The vehicle 1 according to this embodiment includes a front axle 4a and a rear axle 4b. A left front wheel FL and a right front wheel FR, and a left rear wheel RL and a right rear wheel RR, are fixed to both ends of the respective axles through fixing mechanisms. The wheels FL, FR, RL, and RR each include a wheel disk and a tire mounted on the wheel disk. The fixing mechanisms that fix the respective wheels FL, FR, RL, and RR to the axles each include a hub bolt and a wheel nut fastened to the hub bolt, for example. If the wheel nut comes loose from the hub bolt, the wheel begins to wobble and will eventually come off the axle. The determination device 2 determines whether or not the wheel nut is loose, as a wheel condition, and warns the driver of the vehicle 1 when determining that the wheel nut is loose, thereby preventing the wheel from coming off.

An acceleration sensor 6 that detects an acceleration in the axle direction or the vehicle width direction is attached to each of the wheels FL, FR, RL, and RR. The acceleration sensors 6 are not particularly limited as long as the acceleration sensors 6 can detect the accelerations in the axle direction of the wheels FL, FR, RL, and RR, respectively, and the positions where the acceleration sensors 6 are attached are not particularly limited. The acceleration sensors 6 according to this embodiment are each a three-axis acceleration sensor that is integrally configured with an air pressure sensor attached to the air valve of a respective wheel. The acceleration sensors 6 are connected to the determination device 2 through a communication line 5, and sequentially transmit detected accelerations of the respective wheels FL, FR, RL, and RR to the determination device 2.

The vehicle 1 further includes a warning display device 3. The warning display device 3 is not particularly limited as long as the warning display device 3 can display a warning that the wheel nut is loose, and can be embodied in any form, such as a liquid crystal display element, liquid crystal monitor, plasma display, organic EL display, or the like. The position where the warning display device 3 is attached can be appropriately selected, and is preferably a position where the warning display device 3 can be easily viewed by the driver, such as on an instrument panel. In the case where the determination device 2 is connected to an automotive navigation system, a monitor for automotive navigation may be used as the warning display device 3. A warning displayed on the warning display device 3 may be an icon, a graphic, or text information.

<2. Configuration of determination device>

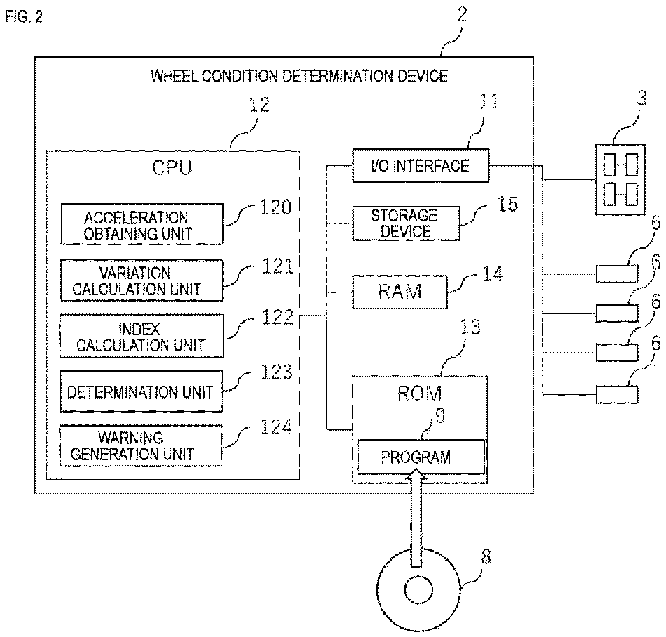

FIG. 2 is a block diagram showing the electrical configuration of the determination device 2. The determination device 2 is configured as a control unit computer of the vehicle 1 in a hardware sense, and includes an I/O interface 11, a central processing unit (CPU) 12, a read only memory (ROM) 13, a random access memory (RAM) 14, and a storage device 15. The I/O interface 11 is a communication device for communicating with external devices such as the acceleration sensors 6 and the warning display device 3. The ROM 13 stores a program 9 for controlling the operation of each part of the vehicle 1. The program 9 is loaded from a storage medium 8 such as a CD-ROM or USB memory into the ROM 13. The CPU 12 reads out the program 9 from the ROM 13, and executes the program 9 to virtually operate as an acceleration obtaining unit 120, a variation calculation unit 121, an index calculation unit 122, a determination unit 123, and a warning generation unit 124. The operations of the units 120 to 124 will be described later. It should be noted that the program 9 may be stored in the storage device 15 instead of the ROM 13. The RAM 14 and the storage device 15 may be used in calculation performed by the CPU 12 as appropriate.

<3. Wheel condition determination method>

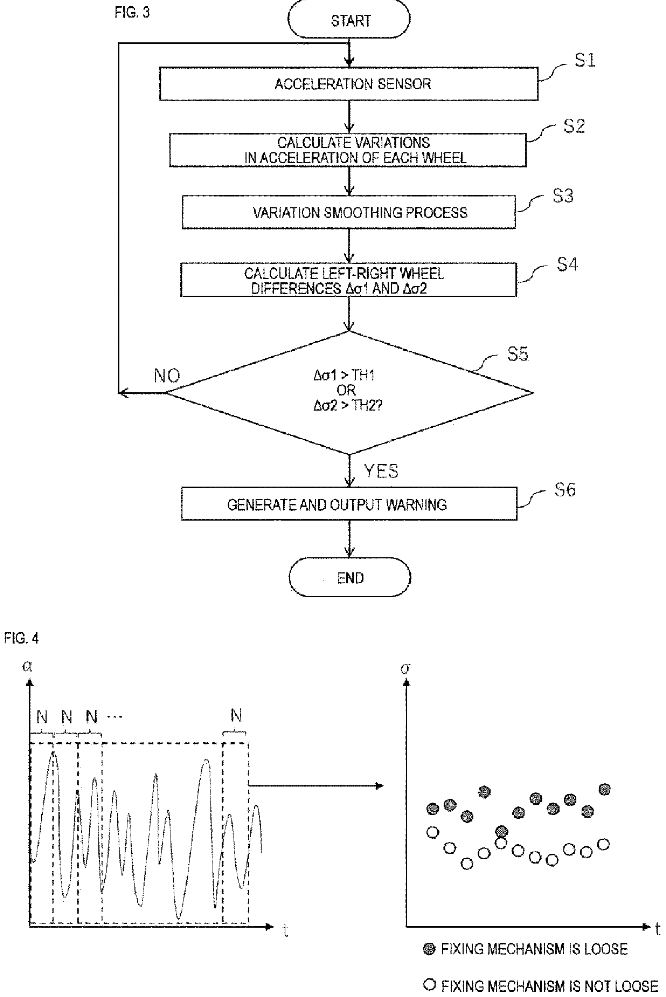

A determination process for determining whether or not the fixing mechanisms for fixing the wheels FL and FR to the front axle 4a are loose and whether or not the fixing mechanisms for fixing the wheels RL and RR to the rear axle 4b are loose (wheel condition determination method) will be described below with reference to FIG. 3. The determination process of FIG. 3 is repeatedly executed at predetermined timings (e.g., once every 10 minutes) while the electrical system of the vehicle 1 is on, for example. The determination process according to this embodiment determines whether or not the fixing mechanisms are loose for the front axle 4a and the rear axle 4b.

In step S1, the acceleration obtaining unit 120 sequentially obtains accelerations $\alpha$ in the axle direction of each of the wheels FL, FR, RL, and RR from the respective corresponding acceleration sensors 6. The acceleration obtaining unit 120 temporarily stores, in the RAM 14, or stores, in the storage device 15, the accelerations $\alpha$ in time order in which the accelerations $\alpha$ have been obtained, in association with the wheels. In this embodiment, if the number of pieces of data of the accelerations $\alpha$ stored in step S1 is greater than or equal to a predetermined value, step S2 is executed.

In step S2, the variation calculation unit 121 calculates a variation in the time direction among the obtained time series of accelerations $\alpha$ of each wheel. Specifically, the variation calculation unit 121 extracts N pieces of data in a time window having a predetermined length between t1 and t2, from the time series of acceleration data of each wheel. The length of the time window may, for example, be 3 seconds. The standard deviation $\sigma$ of the extracted N pieces of data is calculated as a variation in the time direction among the accelerations $\alpha$ according to an expression below. In the expression, "$\alpha_t$" represents an acceleration $\alpha$ at time t between t1 and t2, and "$\alpha_{ave}$" represents the average value of the N pieces of data of the accelerations $\alpha$.

[Math. 1]

$$\sigma = \sqrt{\frac{1}{N} \sum_{t=t1}^{t2} (\alpha_t - \alpha_{ave})}$$

If a fixing mechanism is loose (e.g., a wheel nut is loose), great vibrations are likely to occur in the axle direction. As a result, as shown in FIG. 4, the absolute values of obtained accelerations $\alpha$ tends to be greater than in the normal state, and a variation in the time direction thereamong also tends to be greater. The acceleration $\alpha$ may also vary greatly when the vehicle 1 is cornering or traveling on a bad road. In step S2 according to this embodiment, a plurality of time-series standard deviations $\sigma$ are calculated for each wheel. If the number of calculated standard deviations $\sigma$ reaches a predetermined value (e.g., corresponding to the number of $\alpha$s for 30 seconds), the next step S3 is executed.

In step S3, the index calculation unit 122 executes a process of smoothing the time series of the standard deviations $\sigma$ calculated for each wheel. Specifically, the index calculation unit 122 calculates the moving average of the time series of standard deviations $\sigma$ for each wheel.

In step S4, the index calculation unit 122 calculates an index for comparing variations in the accelerations $\alpha$ of the wheels on the same axle. More specifically, the index calculation unit 122 calculates, as the index, left-right wheel differences $\Delta\sigma1$ and $\Delta\sigma2$ (at the same time) of the moving averages of the standard deviations $\sigma$ calculated in step S3. In this embodiment, the left-right wheel difference $\Delta\sigma1$ is the absolute value of the difference between the moving average of the standard deviations $\sigma$ calculated for the wheel FL, and the moving average of the standard deviations $\sigma$ calculated for the wheel FR. The left-right wheel difference $\Delta\sigma2$ is the absolute value of the difference between the moving average of the standard deviations $\sigma$ calculated for the wheel RL, and the moving average of the standard deviations $\sigma$ calculated for the wheel RR. Vibrations received by wheels from the road surface are substantially synchronous at both ends of the axle. Therefore, by comparing variations in the accelerations $\alpha$ in the same time section of the wheels attached to both ends of the axle, the influences of the road surface on the accelerations $\alpha$ are cancelled out, so that the influence of the loose fixing mechanism is predominantly reflected on the left-right wheel differences $\Delta\sigma1$ and $\Delta\sigma2$.

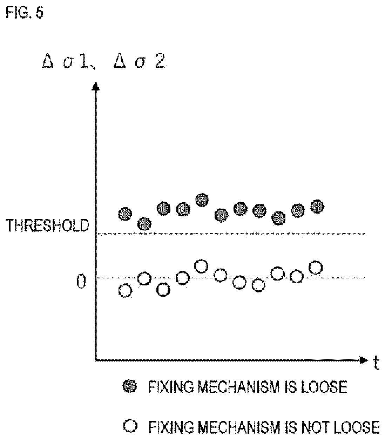

Specifically, as shown in FIG. 5, if neither of the fixing mechanisms for the left front wheel FL and the right front wheel FR is loose, the left-right wheel difference $\Delta\sigma1$ is close to zero, and if neither of the fixing mechanisms for the left rear wheel RL and the right rear wheel RR is loose, the left-right wheel difference $\Delta\sigma2$ is close to zero. On the other hand, if the fixing mechanism for the left front wheel FL or the right front wheel FR is loose, the left-right wheel difference $\Delta\sigma1$ is significantly greater than zero, and if the fixing mechanism for the left rear wheel RL or the right rear wheel RR is loose, the left-right wheel difference $\Delta\sigma2$ is significantly greater than zero.

In step S5, the determination unit 123 determines whether or not any of the fixing mechanisms is loose, based on the left-right wheel differences $\Delta\sigma1$ and $\Delta\alpha2$. Specifically, the determination unit 123 compares the left-right wheel difference $\Delta\sigma1$ with a preset threshold Th1, and determines that the fixing mechanism for the left front wheel FL or the right front wheel FR is loose if the left-right wheel difference $\Delta\sigma1$ is greater than the threshold Th1 (> 0), and that neither of the fixing mechanisms for the left front wheel FL and the right front wheel FR is loose if the left-right wheel difference $\Delta\sigma1$ is smaller than or equal to the threshold Th1. Similarly, the determination unit 123 compares the left-right wheel difference $\Delta\sigma2$ with a preset threshold Th2 (> 0), and determines that the fixing mechanism for the left rear wheel RL or the right rear wheel RR is loose if the left-right wheel difference $\Delta\sigma2$ is greater than the threshold Th2, and that neither of the fixing mechanisms for the left rear wheel RL and the right rear wheel RR is loose if the left-right wheel difference $\Delta\sigma2$ is smaller than or equal to the threshold Th2. The thresholds Th1 and Th2 may, for example, be previously set based on experimental data obtained under conditions that none of the fixing mechanisms of the vehicle 1 is loose, and under conditions that any of the fixing mechanisms is deliberately caused to come loose. The thresholds Th1 and Th2 may be the same or different.

If in step S5 it is determined that the fixing mechanism for the left front wheel FL or the right front wheel FR is loose or that the fixing mechanism for the left rear wheel RL or the right rear wheel RR is loose (YES), step S6 is executed. On the other hand, if in step S5 it is determined that none of the fixing mechanisms is loose (NO), step S1 is executed again.

In step S6, the warning generation unit 124 generates a warning that there is a sign that a wheel is about to come off, and outputs the warning to the warning display device 3. The warning may be represented by text information, an icon, or a graphic that notifies the driver that there is a loose fixing mechanism. The warning may also include text information, an icon, or a graphic that indicates the axle on which the loose fixing mechanism is inferred to be loose, or text information, an icon, or a graphic that prompts a checking of a fixing mechanism.

4. Features

(1) In the determination device 2 according to the above embodiment, the influences of a road surface on which the vehicle 1 is traveling on the acceleration $\alpha$ are cancelled out between the wheels attached to the same axle. Therefore, it can be appropriately determined whether or not there is a sign that a wheel is about to come off, without separately checking a road surface on which the vehicle 1 is traveling. In addition, instead of the accelerations $\alpha$ themselves of each wheel, the standard deviation $\sigma$ of the accelerations $\alpha$ extracted in a fixed time window is calculated, whereby the influence of irregular data is reduced. As a result, the possibility that a wheel condition is erroneously determined and thus a warning is erroneously output, is reduced.

(2) In the determination device 2 according to the above embodiment, the smoothing process is executed before the standard deviations $\sigma$ of the wheels attached to the same axle are compared. As a result, even when changes in the accelerations $\alpha$ are not exactly synchronous between the wheels, the influences from the road surface can be cancelled.

5. Modifications

Although an embodiment of the present invention has been described above, the present invention is not limited to that embodiment. Various changes and modifications can be made thereto without departing from the spirit and scope of the present invention. For example, changes and modifications described below can be made. In addition, the features of the following variations may be combined as appropriate.

(1) The vehicle 1 is not limited to a four-wheel vehicle. The vehicle 1 may include more axles and more wheels. In addition, the above wheel condition determination method may be applied to only either the front axle 4a or the rear axle 4b.

(2) Step S3 may be omitted. Specifically, the standard deviations $\sigma$ of the wheels attached to the same axle that are calculated at the same time may be compared with each other, instead of calculating the moving averages of the standard deviations $\sigma$. In addition, for example, the determination of step S5 may be carried out for a plurality of left-right wheel differences $\Delta\sigma1$ and a plurality of left-right wheel differences $\Delta\sigma2$ that are continual in time series, and the result of the determination of step S5 may be positive ("YES") if the number of left-right wheel differences $\Delta\sigma1$ exceeding the threshold Th1 is greater than or equal to a predetermined value or if the number of left-right wheel differences Δσ2 exceeding the threshold Th2 is greater than or equal to a predetermined value.

(3) The acceleration sensors 6 may be attached to the front axle 4a and the rear axle 4b instead of the wheels. In addition, the acceleration sensors 6 may wirelessly perform data communication with the determination device 2.

(4) The representation of variations in the time direction among the accelerations α is not limited to the standard deviation σ, and may be other statistical indexes representing variations in data such as a variance. In addition, the index for comparing variations in the accelerations α of the wheels is not limited to the left-right wheel difference Δσ1 and the left-right wheel difference Δσ2, and may, for example, be the ratio of variations of the left and right wheels.

**Claims**

1. A wheel condition determination device (2) comprising:

   an acceleration obtaining unit (120) configured to sequentially obtain accelerations in an axle direction of each of wheels (FL, FR, RL, RR) attached to both ends of an axle (4a, 4b) of a vehicle (1);
   a variation calculation unit (121) configured to calculate, based on the sequentially obtained accelerations, variations in a time direction among the accelerations of each of the wheels (FL, FR, RL, RR);
   an index calculation unit (122) configured to calculate an index for comparing the variations of the wheels (FL, FR, RL, RR); and
   a determination unit (123) configured to determine whether or not fixing mechanisms for fixing the wheels (FL, FR, RL, RR) to the axle (4a, 4b) are loose, based on the index.

2. The wheel condition determination device (2) according to claim 1, wherein
   the index calculation unit (122) calculates an index for comparing the variations of the wheels (FL, FR, RL, RR) after the variations are subjected to a smoothing process for each of the wheels (FL, FR, RL, RR).

3. The wheel condition determination device (2) according to claim 1 or 2, further comprising: a warning generation unit (124) configured to generate and output a warning when the determination unit (123) determines that the fixing mechanism is loose.

4. A wheel condition determination method that is executed by one or more computers, the wheel condition determination method comprising:

   sequentially obtaining accelerations in an axle direction of each of wheels (FL, FR, RL, RR) attached to both ends of an axle (4a, 4b) of a vehicle (1);
   calculating, based on the sequentially obtained accelerations, variations in a time direction among the accelerations of each of the wheels (FL, FR, RL, RR);
   calculating an index for comparing the variations of the wheels (FL, FR, RL, RR); and
   determining whether or not fixing mechanisms for fixing the wheels (FL, FR, RL, RR) to the axle (4a, 4b) are loose, based on the index.

5. A wheel condition determination program that causes one or more computers to:

   sequentially obtain accelerations in an axle direction of each of wheels (FL, FR, RL, RR) attached to both ends of an axle (4a, 4b) of a vehicle (1);
   calculate, based on the sequentially obtained accelerations, variations in a time direction among the accelerations of each of the wheels (FL, FR, RL, RR);
   calculate an index for comparing the variations of the wheels (FL, FR, RL, RR); and
   determine whether or not fixing mechanisms for fixing the wheels (FL, FR, RL, RR) to the axle (4a, 4b) are loose, based on the index.

FIG. 1

WHEEL CONDITION
DETERMINATION DEVICE

3

2

1

4a

FL

FR

6

6

5

4b

RL

RR

6

6

FIG. 2

WHEEL CONDITION DETERMINATION DEVICE — 2

CPU — 12

ACCELERATION OBTAINING UNIT — 120

VARIATION CALCULATION UNIT — 121

INDEX CALCULATION UNIT — 122

DETERMINATION UNIT — 123

WARNING GENERATION UNIT — 124

I/O INTERFACE — 11

STORAGE DEVICE — 15

RAM — 14

ROM — 13

PROGRAM — 9

3

6
6
6
6

8

FIG. 3

```
                    ┌──────────────┐
                    │    START     │
                    └──────┬───────┘
                           │
        ┌──────────────────▼──────────────────────┐
        │         ACCELERATION SENSOR             │──── S1
        └──────────────────┬──────────────────────┘
                           │
        ┌──────────────────▼──────────────────────┐
        │         CALCULATE VARIATIONS            │──── S2
        │       IN ACCELERATION OF EACH WHEEL     │
        └──────────────────┬──────────────────────┘
                           │
        ┌──────────────────▼──────────────────────┐
        │      VARIATION SMOOTHING PROCESS        │──── S3
        └──────────────────┬──────────────────────┘
                           │
        ┌──────────────────▼──────────────────────┐
        │      CALCULATE LEFT-RIGHT WHEEL         │──── S4
        │      DIFFERENCES Δσ1 AND Δσ2            │
        └──────────────────┬──────────────────────┘
                           │
                           ▼
```

S5

$\Delta\sigma 1 > TH1$
OR
$\Delta\sigma 2 > TH2$?

NO

YES

GENERATE AND OUTPUT WARNING ──── S6

END

FIG. 4

$\alpha$

N  N  N  ⋯  N

t

$\sigma$

t

● FIXING MECHANISM IS LOOSE

○ FIXING MECHANISM IS NOT LOOSE

FIG. 5

$\Delta \sigma 1、\Delta \sigma 2$

THRESHOLD

0

t

⬤ FIXING MECHANISM IS LOOSE

◯ FIXING MECHANISM IS NOT LOOSE

Europäisches
Patentamt
European
Patent Office
Office européen
des brevets

**EUROPEAN SEARCH REPORT**

Application Number

EP 25 16 7924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 047485 A (ISUZU MOTORS LTD) 6 April 2023 (2023-04-06) * claims 1-7 * | 1-5 | INV. B60T17/22 B60W40/12 G01M17/007 G01M17/013 |
| X | US 2007/299573 A1 (CARLSTROM KEVIN R [US]) 27 December 2007 (2007-12-27) * paragraph [0022] - paragraph [0026]; claims 1-6; figure 1 * | 1,4,5 | |
| A | KR 2022 0071758 A (HYUNDAI MOTOR CO LTD [KR]; KIA CORP [KR] ET AL.) 31 May 2022 (2022-05-31) * the whole document * | 1-5 | |
| A | WO 2023/145195 A1 (ISUZU MOTORS LTD [JP]) 3 August 2023 (2023-08-03) * the whole document * | 1-5 | |
| A | US 11 428 526 B2 (NIRA DYNAMICS AB [SE]) 30 August 2022 (2022-08-30) * the whole document * | 1-5 | TECHNICAL FIELDS SEARCHED (IPC) B60T G01M B60W |

The present search report has been drawn up for all claims

| Place of search | Date of completion of the search | Examiner |
|---|---|---|
| Munich | 3 September 2025 | Graniou, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 7924

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | | Publication date | Patent family member(s) | | Publication date |
|---|---|---|---|---|---|
| JP 2023047485 | A | 06-04-2023 | CN | 117980717 A | 03-05-2024 |
| | | | DE | 112022004608 T5 | 11-07-2024 |
| | | | JP | 7276397 B2 | 18-05-2023 |
| | | | JP | 2023047485 A | 06-04-2023 |
| | | | US | 2024369454 A1 | 07-11-2024 |
| | | | WO | 2023048123 A1 | 30-03-2023 |
| US 2007299573 | A1 | 27-12-2007 | NONE | | |
| KR 20220071758 | A | 31-05-2022 | NONE | | |
| WO 2023145195 | A1 | 03-08-2023 | JP | 7420155 B2 | 23-01-2024 |
| | | | JP | 2023108689 A | 07-08-2023 |
| | | | WO | 2023145195 A1 | 03-08-2023 |
| US 11428526 | B2 | 30-08-2022 | CN | 109715418 A | 03-05-2019 |
| | | | DE | 102016010750 A1 | 08-03-2018 |
| | | | EP | 3509875 A1 | 17-07-2019 |
| | | | ES | 2909575 T3 | 09-05-2022 |
| | | | US | 2019226841 A1 | 25-07-2019 |
| | | | WO | 2018046136 A1 | 15-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023145195 A